# EUROPÄISCHE PATENTSCHRIFT

(11) **EP 3 881 037 B1**
(45) Veröffentlichungstag und Bekanntmachung des Hinweises auf die Patenterteilung: **22.03.2023**
(21) Anmeldenummer: 19794879.7
(22) Anmeldetag: 18.09.2019
(51) Int. Cl.: G01G 15/00, G01G 17/00, G01G 23/00, B65B 3/00, B65B 57/10, G01G 17/04

(54) **ERHÖHUNG DER WIEGEGENAUIGKEIT BEIM WIEGEN GENESTETER PHARMAZEUTISCHER BEHÄLTER**
INCREASING THE WEIGHING ACCURACY WHEN WEIGHING NESTED PHARMACEUTICAL CONTAINERS
AUGMENTATION DE LA PRÉCISION DE PESÉE LORS DE LA PESÉE DE CONTENANTS PHARMACEUTIQUES EMPILÉS

(30) Priorität: 14.11.2018 DE 102018219402
(43) Veröffentlichungstag der Anmeldung: 22.09.2021
(73) Patentinhaber: Syntegon Technology GmbH, 71332 Waiblingen (DE); Syntegon Packaging Systems AG, 8222 Beringen (CH); Syntegon Packaging Technology GmbH, 73630 Remshalden (DE)
(72) Erfinder: MEHRINGER, Paul, 70569 Stuttgart (DE); KRAUSS, Ulrich, 74532 Ilshofen (DE); OTT, Harald, 71691 Freiberg Am Neckar (DE); GERUNDT, Oliver, 71292 Friolzheim (DE); FLECKENSTEIN, Tim, 74541 Vellberg (DE); ULLHERR, Klaus, 74564 Crailsheim (DE); RADTKE, Joachim, Stuttgart (DE); SCHAFFERT, Herbert, 74388 Thalheim (DE); SCHOLL, Frank, 8240 Thayngen (CH); MAERZ, Martin, 74597 Weipertshofen (DE); WILD, Heiko, 73479 Ellwangen (DE); BARTHELMESS, Rolf, 74564 Crailsheim (DE); CIVELEK, Faruk, 71384 Weinstadt (DE); PETERS, Jochen, 74564 Crailsheim (DE); EISTERT, Olaf, Birenbach (DE); RIEBELING, Ralf, 74564 Crailsheim (DE); BECK, Thomas, 74594 Kressberg (DE); ROTH, Philipp, 74579 Fichtenau (DE); LAUTENSCHLAGER, Jochen, 71404 Korb (DE)
(74) Vertreter: DREISS Patentanwälte PartG mbB
(86) Internationale Anmeldenummer: PCT/EP2019/075092
(87) Internationale Veröffentlichungsnummer: WO 2020/099000

(56) Entgegenhaltungen:
- WO-A2-2014/072019
- DE-A1-102016 207 600

## Beschreibung

### Stand der Technik

Die vorliegende Erfindung betrifft ein Verfahren und eine Vorrichtung zum Wiegen in einem Träger genesteter pharmazeutischer Behälter.

Bei der Herstellung pharmazeutischer Produkte in Massenproduktion werden entsprechende pharmazeutische Behälter oder Gefäße, z.B. Spritzen, Ampullen, Karpulen, Vials oder dergleichen, häufig zu mehreren in einer Kunststoffträgerplatte, genannt Nest, angeordnet. Ein solches Nest wird meist in eine Grundplatte zur Positionierung der Behälter und zum Durchtransport durch eine Verarbeitungsmaschine eingesetzt, wie beispielsweise in der DE 10 2004 035 061 A1 beschrieben. Die Behälter können in der Verarbeitungsmaschine unter anderem befüllt, verschlossen und einzeln entnommen werden. Dabei ist außerdem eine Überprüfung der Füllmenge der Behälter erforderlich, was meist durch eine Entnahme der Behälter aus dem Träger und anschließendem Wiegen erfolgt. Alternativ ist bereits ein Wiegen der Behälter im Träger, wobei diese durch eine Wiegevorrichtung von unten angehoben werden, bekannt. Weiterer Stand der Technik sind die DE 10 2016 207600 A1, welche als nächster Stand der Technik angesehen wird, und die WO 2014/072019 A2.

### Offenbarung der Erfindung

Das erfindungsgemäße Verfahren zum Wiegen von in einem Träger genesteten pharmazeutischen Behältern mit den Merkmalen des Anspruchs 1 zeichnet sich dadurch aus, dass auf einfache Art und Weise die Genauigkeit der Messergebnisse beim Wiegen erhöht wird. Dies wird erfindungsgemäß dadurch erreicht, dass eine Relativbewegung zwischen zumindest einem pharmazeutischen Behälter, welcher mittels einer Wiegevorrichtung gewogen wird, und dem Träger hervorgerufen wird. Eine Relativbewegung zwischen Träger und pharmazeutischem Behälter ist insbesondere dadurch möglich, dass der pharmazeutische Behälter einen kleineren Durchmesser aufweist, als eine entsprechende Öffnung in dem Träger, in welchem der Behälter, insbesondere hängend, angeordnet ist.

Durch die Relativbewegung wird der pharmazeutische Behälter von dem Träger freigestellt. Das heißt, im freigestellten Zustand ist der pharmazeutische Behälter locker beweglich im Träger angeordnet. Dadurch wird verhindert, dass sich der Behälter beim Wiegen im Träger verkantet oder verklemmt. Zudem wird ein besonders leichtes Anheben des Behälters durch eine verringerte Reibung zwischen freigestelltem Behälter und Träger ermöglicht. Wenn der im Träger genestete pharmazeutische Behälter somit zum Wiegen beispielsweise auf einer Wiegevorrichtung abgesetzt wird, oder durch eine Wiegevorrichtung angehoben wird, wird eine Verfälschung der Messergebnisse dadurch verringert, dass das Verklemmen des Behälters im Träger verhindert wird und dass die Reibung zwischen Träger und Behälter reduziert wird. Beim Wiegen des pharmazeutischen Behälters werden dadurch potentielle, das Messergebnis verfälschende Einflüsse besonders gering gehalten.

Die Abweichungen oder Störgrößen sind bei dem erfindungsgemäßen Verfahren besonders vorteilhaft messbar und reproduzierbar und können somit bei einer Auswertung der Messwerte entsprechend berücksichtigt und herausgerechnet werden.

Bei dem Wiegen des pharmazeutischen Behälters wird bevorzugt ein Füllgewicht eines Produkts, welches in den pharmazeutischen Behälter eingefüllt ist bestimmt. Dazu wird insbesondere das Bruttogewicht des gefüllten pharmazeutischen Behälters mittels der Wiegevorrichtung bestimmt. Das Füllgewicht kann dabei aus einer Differenz des Bruttogewichts und einem Tara-Gewicht, dem Gewicht des leeren pharmazeutischen Behälters, bestimmt werden. Das Tara-Gewicht kann beispielsweise vor dem Befüllen des pharmazeutischen Behälters ebenfalls mittels der Wiegevorrichtung oder extern mittels einer weiteren Wiegevorrichtung bestimmt werden. Durch das erfindungsgemäße Verfahren kann dabei eine besonders hohe Genauigkeit beim Wiegen des zumindest einen pharmazeutischen Behälters erzielt werden.

Die Unteransprüche haben bevorzugte Weiterbildungen der Erfindung zum Inhalt.

Erfindungsgemäß wird die Relativbewegung durch eine Schwingung hervorgerufen. Besonders bevorzugt ist die Schwingung eine harmonische Schwingung. Mit einer Schwingung ist es besonders günstig möglich, eine Relativbewegung zwischen Träger und pharmazeutischen Behälter herzustellen, so dass sich der pharmazeutische Behälter in einem stationären, freigestellten Zustand relativ zu dem Träger befindet. Besonders günstig ist es, wenn mehrere überlagerte Schwingungen eingebracht werden. Kenngrößen wie Amplitude, Frequenz und Phasenverschiebung der einzelnen, oder der mehreren Schwingungen können dabei in vielfältiger Weise angepasst werden, um ein optimales Ergebnis hinsichtlich des Freistellens der pharmazeutischen Behälter zu erzielen. Bevorzugt sind dabei Amplitude, Frequenz und/oder Phasenverschiebung speziell an die Abmessungen der jeweiligen pharmazeutischen Behälter angepasst.

Besonders vorteilhaft ist es, wenn die Schwingung in einer x-Richtung und/oder in einer y-Richtung und/oder in einer z-Richtung erfolgt. Dabei sind beliebige Kombinationen eindimensionaler oder mehrdimensionaler Schwingungen möglich. Die x-Richtung und die y-Richtung sind dabei orthogonal zueinander und spannen eine - in Bezug auf ein Schwerefeld - horizontale Ebene auf, in welcher der Träger liegt. Die z-Richtung ist orthogonal jeweils zur x-Richtung und zur y-Richtung und liegt somit - in Bezug auf das Schwerefeld - in vertikaler Richtung. Besonders bevorzugt sind zwei überlagerte harmonische Schwingungen jeweils in x-Richtung und y-Richtung, insbesondere in Form sogenannter Lissajous-Figuren, vorgesehen. Dadurch ist eine Freistellung des pharmazeutischen Behälters besonders einfach und zuverlässig möglich.

Vorzugsweise führen der Träger und/oder die Wiegevorrichtung die Schwingung in Form einer Bewegung aus. Das heißt, es kann sowohl entweder nur der Träger eine Schwingung in Form einer Bewegung ausführen, als auch nur die Wiegevorrichtung. Zudem können Träger und Wiegevorrichtung auch gleichzeitig jeweils eine oder mehrere Schwingungen in Form einer Bewegung ausführen. Dies führt in jedem Fall dazu, dass Träger und pharmazeutischer Behälter sich relativ zueinander bewegen, insbesondere gegeneinander schwingen. Da der pharmazeutische Behälter einen kleineren Durchmesser als die entsprechende Öffnung im Träger, in welcher der Behälter angeordnet ist, aufweist, kann der Behälter der Bewegung des Trägers nicht direkt folgen und wird vom schwingenden Träger regelmäßig angestoßen bzw. mitgenommen. Dadurch stellt sich ein definierter stationärer Zustand ein, bei welchem der Behälter im Wesentlichen mittig zur entsprechenden Öffnung im Träger gehalten wird. Vorzugsweise liegt eine Frequenz der Schwingung dazu zwischen 10Hz und 25Hz. Sofern nur die Wiegevorrichtung die Schwingung in Form einer Bewegung ausführt, kann der pharmazeutische Behälter nur freigestellt werden, wenn der Behälter und die Wiegevorrichtung sich berühren, also während des Wiegevorgangs. Durch die Schwingung in Form einer Bewegung des Trägers und/oder der Wiegevorrichtung kann der pharmazeutische Behälter besonders einfach und zuverlässig vom Träger freigestellt werden. Der pharmazeutische Behälter wird dabei durch eine regelmäßige mechanische Bewegung von einer möglicherweise verkanteten Anordnung oder anderweitig reibungstechnisch ungünstigen Positionierung im Träger gelockert.

Bevorzugt wird die Bewegung des Trägers und/oder der Wiegevorrichtung durch zumindest einen Servomotor, welcher besonders bevorzugt einen Exzenter aufweist, hervorgerufen. Alternativ oder zusätzlich kann zumindest ein Vibrationsmotor vorgesehen sein, welcher die Bewegung des Trägers und/oder der Wiegevorrichtung hervorruft. Der Servomotor und/oder der Vibrationsmotor ist dabei jeweils entsprechend mit dem Träger und/oder der Wiegevorrichtung mechanisch gekoppelt um die entsprechende Bewegung zu bewirken. Ein Servomotor oder ein Vibrationsmotor ist besonders günstig, um mit geringem konstruktiven Aufwand den Träger und/oder die Wiegevorrichtung in Schwingung versetzen.

Weiterhin ist es besonders vorteilhaft, wenn die Schwingung in Form von Schall eingebracht wird. Bevorzugt wird der Schall dabei mittels zumindest einer Lautsprechereinrichtung erzeugt. Die zumindest eine Lautsprechereinrichtung ist vorteilhafterweise in den Träger und/oder in die Wiegevorrichtung integriert. Alternativ oder zusätzlich kann auch zumindest eine separate externe Lautsprechereinrichtung verwendet werden. Der Schall wird dabei jeweils derart eingebracht, dass der pharmazeutische Behälter sich relativ zu dem Träger bewegt. Beispielsweise kann der Schall so auf den pharmazeutischen Behälter angepasst sein, dass eine Resonanz hervorgerufen wird. Eine Einbringung der Schwingung in Form von Schall ist eine weitere besonders einfache und günstige Möglichkeit das Freistellen des pharmazeutischen Behälters vom Träger zu bewirken.

Weiter bevorzugt wird die Relativbewegung zwischen dem pharmazeutischen Behälter und dem Träger durch eine Luftströmung am pharmazeutischen Behälter hervorgerufen. Besonders bevorzugt handelt es sich dabei um eine pulsierende Luftströmung. Die Luftströmung wird vorzugsweise mittels einer Gebläseeinrichtung erzeugt. Beispielsweise kann eine Luftströmung entlang einer Ebene des Trägers eingebracht werden, sodass der Luftstrom senkrecht auf den pharmazeutischen Behälter auftrifft und eine Kraft auf diesen ausübt, wodurch der pharmazeutische Behälter gegenüber dem Träger bewegt und somit freigestellt wird. Alternativ kann auch eine Art Luftpolster vorgesehen sein, welche den im Träger hängenden pharmazeutischen Behälter zumindest kurzzeitig anhebt, um diesen freizustellen.

Weiterhin ist es günstig, wenn die Relativbewegung zwischen dem pharmazeutischen Behälter und dem Träger durch elektrostatische Effekte am pharmazeutischen Behälter hervorgerufen wird. Dies kann beispielsweise dadurch erfolgen, dass ein, insbesondere instationäres, elektrisches Feld eine Kraft auf den pharmazeutischen Behälter ausübt, sodass dieser relativ zum Träger bewegt wird. Die elektrostatischen Effekte werden vorteilhafterweise durch einen Kondensator, insbesondere zwei Kondensatorplatten, zwischen welchen der Träger angeordnet ist, hervorgerufen.

Besonders bevorzugt wird die Relativbewegung vor dem Wiegen hervorgerufen. Dies ist insbesondere dann günstig, wenn die hervorgerufene Relativbewegung sich auf das Wiegeergebnis auswirken könnte, beispielsweise wenn der pharmazeutische Behälter zum Freistellen durch ein Luftpolster kurzzeitig angehoben wird. Alternativ oder zusätzlich kann die Relativbewegung auch während des Wiegevorgangs hervorgerufen werden. Wenn die Wiegevorrichtung und/oder der Träger beispielsweise eine Schwingung in Form einer Bewegung ausführen, können dabei besonders genaue Ergebnisse beim Wiegen des pharmazeutischen Behälters erzielt werden.

Bevorzugt wird der zumindest eine pharmazeutische Behälter dadurch gewogen, dass dieser mittels der Wiegevorrichtung angehoben wird. Das heißt, die Wiegevorrichtung befindet sich bezüglich des Schwerefelds vertikal unterhalb des im Träger genesteten pharmazeutischen Behälters. Durch Anheben kann die Wiegevorrichtung das Gewicht des pharmazeutischen Behälters feststellen. Dadurch ist ein besonders einfaches und zeitsparendes Wiegen des pharmazeutischen Behälters möglich, insbesondere während weiterer Verarbeitungsschritte des pharmazeutischen Behälters, also als Inprozesskontrolle.

Ferner betrifft die Erfindung eine Verarbeitungsmaschine zum Verarbeiten der pharmazeutischen Behälter, welche eine Wiegeeinrichtung umfasst. Die Verarbeitungsmaschine ist dabei eingerichtet das, erfindungsgemäße Verfahren auszuführen. Bevorzugt ist die Wiegeeinrichtung eingerichtet, das Wiegen des zumindest einen pharmazeutischen Behälters als Inprozesskontrolle durchzuführen, also während der Verarbeitung, beispielsweise während des Befüllens, des pharmazeutischen Behälters.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: ein Detail einer vereinfachten schematischen Schnittansicht genesteter pharmazeutischer Behälter, welche mit einem Verfahren gemäß einem ersten Ausführungsbeispiel der Erfindung gewogen werden,
- Figur 2: eine perspektivische Ansicht der genesteten pharmazeutischen Behälter der Figur 1,
- Figur 3: eine perspektivische Ansicht der genesteten pharmazeutischen Behälter, welche mit einem Verfahren gemäß einem zweiten Ausführungsbeispiel der Erfindung gewogen werden,
- Figur 4: eine perspektivische Ansicht der genesteten pharmazeutischen Behälter, welche mit einem Verfahren gemäß einem dritten Ausführungsbeispiel der Erfindung gewogen werden,
- Figur 5: eine perspektivische Ansicht der genesteten pharmazeutischen Behälter, welche mit einem Verfahren gemäß einem vierten Ausführungsbeispiel der Erfindung gewogen werden, und
- Figur 6: eine vereinfachte schematische Ansicht einer Verarbeitungsmaschine zum Verarbeiten der genesteten pharmazeutischen Behälter der Figur 1.

### Bevorzugte Ausführungsformen der Erfindung

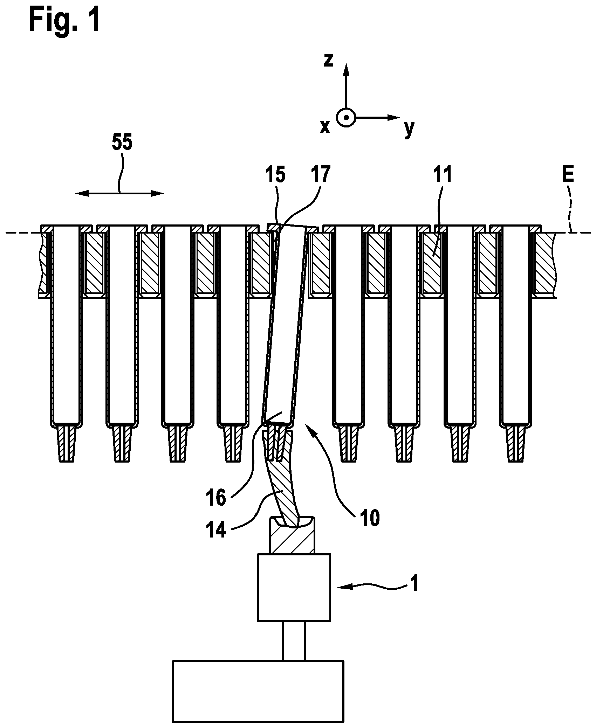

Die Figur 1 zeigt ein Detail einer vereinfachten schematischen Schnittansicht einer Vielzahl an in einem Träger 11 genesteten pharmazeutischen Behältern, welche in den bevorzugten Ausführungsbeispielen Spritzen 10 sind. Die Spritzen 10 werden dabei mit einem Verfahren gemäß einem ersten Ausführungsbeispiel der Erfindung gewogen.

Dazu ist eine Wiegevorrichtung 1 vorgesehen, welche in vertikaler z-Richtung unterhalb der Spritzen 10 angeordnet ist. Die Spritzen 10 werden gewogen, in dem diese mittels der Wiegevorrichtung 1 in vertikal in z-Richtung angehoben werden.

Wie in der Figur 1 zu erkennen, sind die Spritzen 10 hängend im Träger 11 angeordnet. Das heißt, ein Fingerflansch 15 jeder Spritze 10 liegt am Träger 11 an und ein zylindrischer Grundkörper 16 jeder Spritze 10 erstreckt sich durch eine Durchgangsöffnung 17 des Trägers 11. Der zylindrische Grundkörper 16 der Spritze 10 weist dabei einen kleineren Durchmesser als die entsprechende Durchgangsöffnung 17 auf.

Jede Spritze 10 weist zudem einen Nadelschutz 14 auf, wobei aus Gründen der Übersichtlichkeit nur eine Spritze 10 mit Nadelschutz 14 dargestellt ist. Die Wiegevorrichtung 1 setzt dabei zum Wiegen am Nadelschutz 14 an.

Insbesondere bei einem krummen Nadelschutz 14 kann es beim Anheben zu einem Verkanten der Spritze 10 im Träger 11 kommen, wie in der Figur 1 dargestellt. Dies kann zu einer Verfälschung der Messergebnisse beim Wiegen führen.

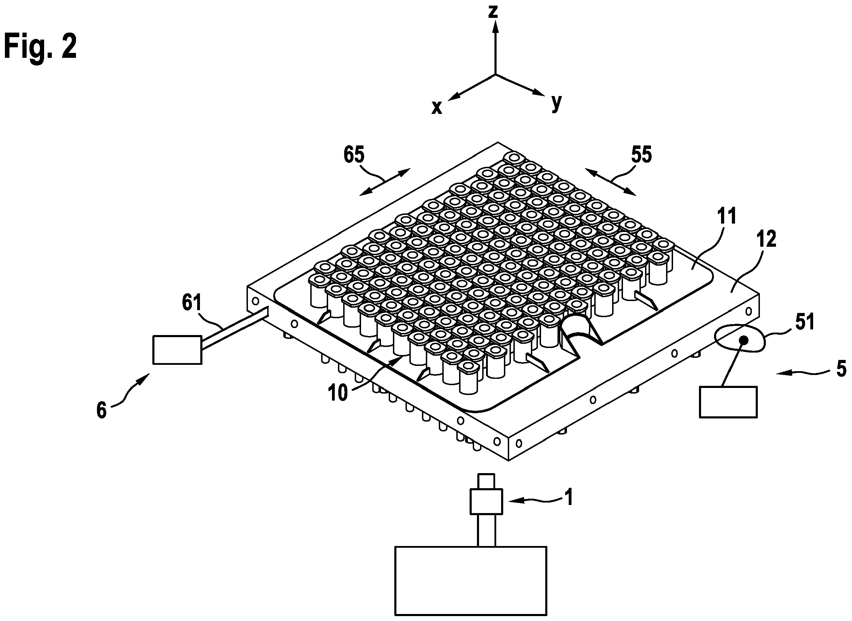

Um ein solches Verkanten zu verhindern, und um eine Reibung zwischen Spritze 10 und Träger 11 möglichst gering zu halten, ist zur Erhöhung der Wiegegenauigkeit bei dem erfindungsgemäßen Verfahren vorgesehen, eine Relativbewegung zwischen den Spritzen 10 und dem Träger 11 hervorzurufen. Dazu führt der Träger 11 im ersten Ausführungsbeispiel eine Bewegung in Form zweier überlagerter harmonischer Schwingungen 55, 65 aus. Dabei erfolgt eine erste Schwingung 55 des Trägers 11 in x-Richtung und eine zweite Schwingung 65 in y-Richtung. Das heißt, die erste Schwingung 55 und die zweite Schwingung 65 liegen in einer horizontalen Ebene E in welcher der Träger 11 liegt. Die Bewegung des Trägers 11 in Form der überlagerten Schwingungen 55, 65 wird durch einen Servomotor 5 und einen Vibrationsmotor 6 hervorgerufen, wie in der Figur 2 dargestellt.

Die Figur 2 zeigt dabei eine perspektivische Ansicht der in Figur 1 dargestellten genesteten Spritzen 10 und der Wiegevorrichtung 1. Der Träger 11 ist in einer Grundplatte 12 angeordnet, wobei Träger 11 und Grundplatte 12 unbeweglich miteinander verbunden sind. Außerhalb der Grundplatte 12 sind der Servomotor 5 und der Vibrationsmotor 6 angeordnet, welche die Bewegung der Grundplatte 12 und somit auch des Trägers 11 hervorrufen. Der Servomotor 5 weist einen Exzenter 51 auf, mittels welcher dieser die Grundplatte 12 in Bewegung versetzen kann. Durch den Servomotor 5 führt die Grundplatte 12, und somit auch der Träger 11, die Bewegung in Form der ersten Schwingung 55 in y-Richtung aus. Der Vibrationsmotor 6 weist eine Stange 61 auf, mittels welcher dieser ebenfalls die Grundplatte 12 in Bewegung versetzen kann. Durch den Vibrationsmotor 6 führt die Grundplatte 12, und somit auch der Träger 11, die Bewegung in Form der zweiten Schwingung 65 in x-Richtung aus. Die erste Schwingung 55 und die zweite Schwingung 65 weisen jeweils eine Frequenz von zwischen 10Hz und 25Hz auf.

Aufgrund der Trägheit der Spritzen 10 und der spielbehafteten Anordnung der Spritzen 10 im Träger 11, bewirkt die Bewegung des Trägers 11, dass sich die Spritzen 10 relativ zu dem Träger 11 bewegen. Dadurch werden die Spritzen 10 im Träger 11 freigestellt. Das heißt, die Spritzen 10 sind in der Durchgangsöffnung 17 des Trägers 11 locker beweglich angeordnet. In anderen Worten werden die Spritzen 10 somit durch die hervorgerufenen Schwingungen 55, 65 locker gewackelt. Dadurch wird ein Verkanten der Spritzen 10 im Träger 11 verhindert und eine Reibung zwischen Spritzen 10 und Träger 11 wird verringert. Somit können die Spritzen 10 mittels der Wiegevorrichtung 1 ohne Einfluss unerwünschter störender Kräfte angehoben werden und eine sehr genaue Bestimmung des Gewichts der Spritzen 10 ist möglich.

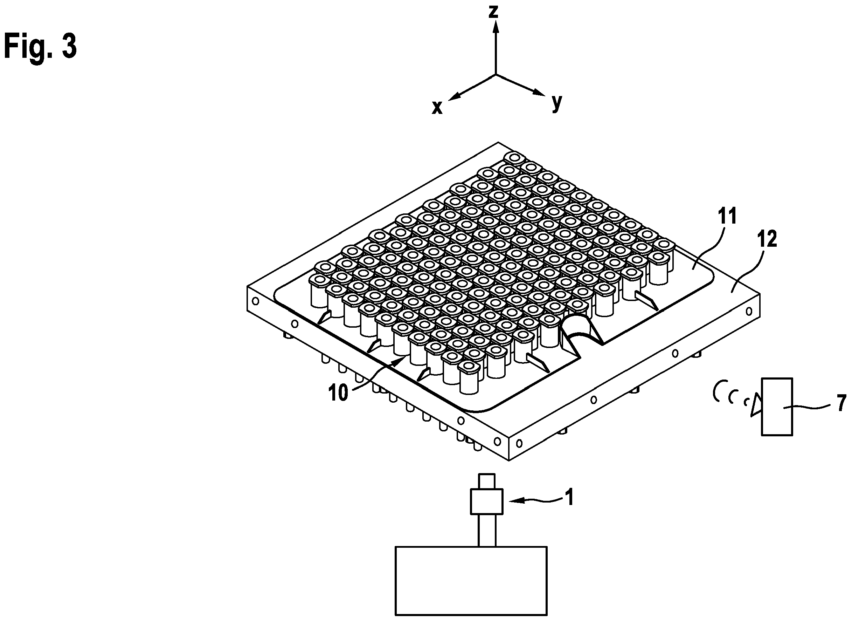

Die Figur 3 zeigt eine perspektivische Ansicht der genesteten Spritzen 10, welche mit einem Verfahren gemäß einem zweiten Ausführungsbeispiel der Erfindung gewogen werden. Das zweite Ausführungsbeispiel entspricht dabei im Wesentlichen dem ersten Ausführungsbeispiel mit einer alternativen Möglichkeit einer Einbringung von Schwingungen, um die Spritzen 10 vom Träger 11 freizustellen.

Im dritten Ausführungsbeispiel erfolgt eine Freistellung der Spritzen 10 vom Träger 11 durch Einbringen der Schwingung in Form von Schall. Der Schall wird dabei mittels einer Lautsprechereinrichtung 7 erzeugt. Der Schall wird im Wesentlichen in y-Richtung in die Anordnung aus Grundplatte 12, Träger 11 und Spritzen 10 eingebracht. Der Schall ist dabei so angepasst, dass aufgrund von Resonanz eine Bewegung der Spritzen 10 relativ zum Träger 11 hervorgerufen wird. Dadurch ist ebenfalls auf besonders einfache Art und Weise ein Freistellen der Spritzen 10 vom Träger 11 möglich.

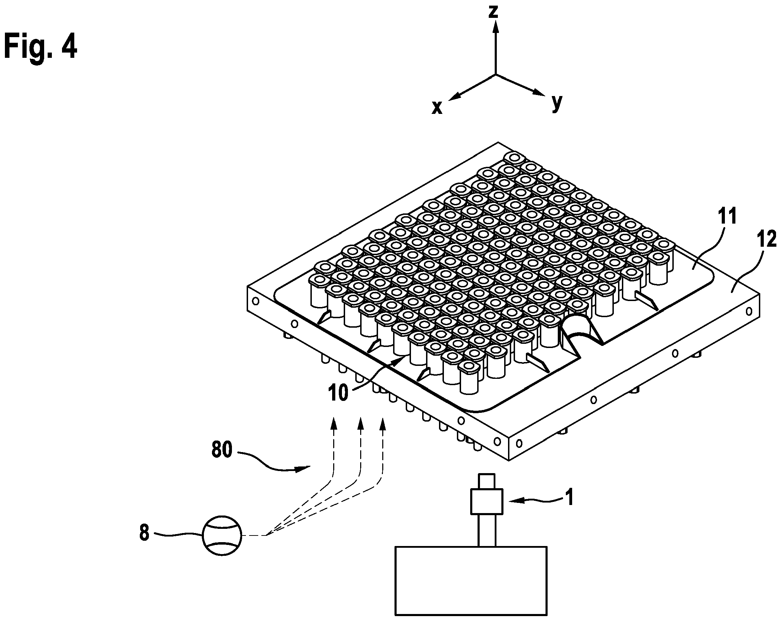

Die Figur 4 zeigt eine perspektivische Ansicht der genesteten Spritzen 10, welche mit einem Verfahren gemäß einem dritten Ausführungsbeispiel der Erfindung gewogen werden. Das dritte Ausführungsbeispiel entspricht dabei ebenfalls im Wesentlichen dem ersten Ausführungsbeispiel mit einer alternativen Möglichkeit einer Erzeugung der Relativbewegung zwischen Spritzen 10 und Träger 11 zur Freistellung der Spritzen 10 vom Träger 11. Im dritten Ausführungsbeispiel in der Figur 4 erfolgt die Freistellung der Spritzen 10 vom Träger 11 dadurch, dass eine pulsierende Luftströmung 80 erzeugt wird, welche auf die Spritzen 10 auftrifft. Die pulsierende Luftströmung 80 wird dabei mittels einer Gebläseeinrichtung 8 erzeugt und von unten parallel zur z-Richtung zu der Anordnung aus Grundplatte 12 und Träger 11 mit den Spritzen 10 geleitet. Durch die pulsierende Luftströmung 80 werden die Spritzen 10 mehrmals kurzzeitig relativ zu dem Träger 11 angehoben, und somit vom Träger 11 freigestellt.

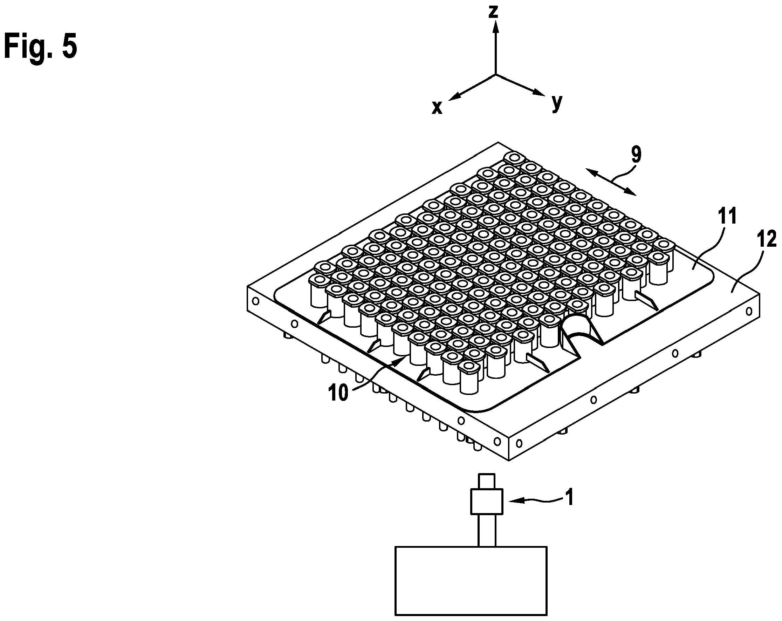

Die Figur 5 zeigt eine perspektivische Ansicht der genesteten Spritzen 10, welche mit einem Verfahren gemäß einem vierten Ausführungsbeispiel der Erfindung gewogen werden. Das vierte Ausführungsbeispiel entspricht dabei ebenfalls im Wesentlichen dem ersten Ausführungsbeispiel mit einer weiteren alternativen Möglichkeit einer Erzeugung der Relativbewegung zwischen Spritzen 10 und Träger 11 zur Freistellung der Spritzen 10 vom Träger 11. Im vierten Ausführungsbeispiel in der Figur 5 erfolgt eine Freistellung der Spritzen 10 vom Träger 11 dadurch, dass elektrostatische Effekte in Form eines wechselnden elektrischen Feldes 9 die Relativbewegung zwischen pharmazeutischen Behälter 10 und Träger 11 hervorrufen. Die Erzeugung des elektrischen Feldes 9 erfolgt mittels eines nicht dargestellten Kondensators.

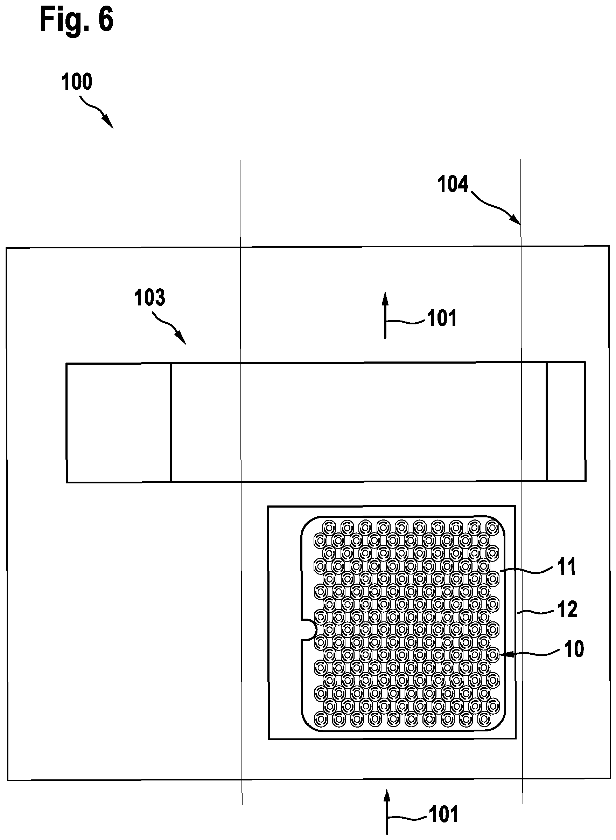

Die Figur 6 zeigt eine Verarbeitungsmaschine 100 zum Verarbeiten der genesteten Spritzen 10 der Figur 1. Die Verarbeitungsmaschine 100 ist eingerichtet, das Verfahren gemäß dem ersten Ausführungsbeispiel der Figuren 1 und 2 durchzuführen. Die Anordnung aus Grundplatte 12, Träger 11 und Spritzen 10 wird mittels einer Transporteinrichtung 104 entlang einer Transportrichtung 101 durch die Verarbeitungsmaschine 100. transportiert

Die Verarbeitungsmaschine 100 umfasst weiterhin eine Verarbeitungsstation 103, welche unter anderem die, in der Figur 6 nicht dargestellte, Wiegevorrichtung 1 umfasst. Ebenso umfasst die Verarbeitungsstation 103 den nicht dargestellten Servomotor 5 und den Vibrationsmotor 6, um die Spritzen 10 vom Träger 11 freizustellen. Weiterhin umfasst die Verarbeitungsstation 103 eine Befüllstation zum Befüllen der Spritzen 10, eine Entnahmestation zum Entnehmen der Spritzen 10, welche hier jeweils nicht näher beschrieben werden.

Es sei angemerkt, dass eine beliebige Kombination der beschriebenen Ausführungsbeispiele möglich ist. Ebenso können die Schwingungen, der Schall, oder die Luftströmungen jeweils in jeder beliebigen Richtung vorliegen.

## Patentansprüche

1. Verfahren zum Wiegen von in einem Träger (11) genesteter pharmazeutischer Behälter (10),
bei welchem zumindest einer der genesteten Behälter (10) mittels einer Wiegevorrichtung (1) gewogen wird,
wobei eine Relativbewegung zwischen dem zumindest einen pharmazeutischen Behälter (10) und dem Träger (11) hervorgerufen wird, um den pharmazeutischen Behälter (10) von dem Träger (11) zur Erhöhung der Wiegegenauigkeit freizustellen,
**dadurch gekennzeichnet, dass** die Relativbewegung durch eine Schwingung, insbesondere eine harmonische Schwingung, hervorgerufen wird.

2. Verfahren nach Anspruch 1, wobei die Schwingung in einer x-Richtung (x) und/oder in einer y-Richtung (y) und/oder in einer z-Richtung (z) erfolgt.

3. Verfahren nach einem der Ansprüche 1 oder2, wobei der Träger (11) und/oder die Wiegevorrichtung (1) die Schwingung in Form einer Bewegung ausführen.

4. Verfahren nach Anspruch 3, wobei die Bewegung des Trägers (11) und/oder der Wiegevorrichtung (1) durch zumindest einen Servomotor (5), insbesondere mit einem Exzenter (51), und/oder zumindest einen Vibrationsmotor (6) hervorgerufen wird.

5. Verfahren nach einem der Ansprüche 1 oder 2, wobei die Schwingung in Form von Schall, insbesondere mittels zumindest einer Lautsprechereinrichtung (7), eingebracht wird.

6. Verfahren nach einem der vorhergehenden Ansprüche, wobei die Relativbewegung durch eine Luftströmung, insbesondere eine pulsierende Luftströmung(80), am pharmazeutischen Behälter (10) hervorgerufen wird, wobei die Luftströmung insbesondere mittels zumindest einer Gebläseeinrichtung (8) erzeugt wird.

7. Verfahren nach einem der vorhergehenden Ansprüche, wobei die Relativbewegung durch elektrostatische Effekte (9) am pharmazeutischen Behälter (10) hervorgerufen wird.

8. Verfahren nach einem der vorhergehenden Ansprüche, wobei die Relativbewegung vor dem Wiegen und/oder während des Wiegens hervorgerufen wird.

9. Verfahren nach einem der vorhergehenden Ansprüche, wobei der zumindest eine pharmazeutische Behälter (10) durch Anheben mittels der Wiegevorrichtung (1) gewogen wird.

10. Verarbeitungsmaschine (100) zum Verarbeiten der pharmazeutischen Behälter (10), umfassend eine Wiegeeinrichtung (1), wobei die Verarbeitungsmaschine (100) eingerichtet ist, das Verfahren nach einem der vorhergehenden Ansprüche auszuführen.

## Claims

1. Method for weighing pharmaceutical containers (10) nested in a carrier (11),
in which at least one of the nested containers (10) is weighed by means of a weighing device (1),
wherein a relative movement between the at least one pharmaceutical container (10) and the carrier (11) is caused in order to release the pharmaceutical container (10) from the carrier (11) to increase the weighing accuracy,
**characterized in that** the relative movement is caused by an oscillation, in particular a harmonic oscillation.

2. Method according to claim 1, wherein the oscillation is effected in an x-direction (x) and/or in a y-direction (y) and/or in a z-direction (z).

3. Method according to either of claims 1 or 2, wherein the carrier (11) and/or the weighing device (1) carry out the oscillation in the form of a movement.

4. Method according to claim 3, wherein the movement of the carrier (11) and/or the weighing device (1) is caused by at least one servomotor (5), in particular having an eccentric (51), and/or by at least one vibration motor (6).

5. Method according to either of claims 1 or 2, wherein the oscillation is introduced in the form of sound, in particular by means of at least one loudspeaker device (7).

6. Method according to any of the preceding claims, wherein the relative movement is caused by an air flow, in particular a pulsating air flow (80), on the pharmaceutical container (10), wherein the air flow is generated in particular by means of at least one blower device (8).

7. Method according to any of the preceding claims, wherein the relative movement is caused by electrostatic effects (9) on the pharmaceutical container (10).

8. Method according to any of the preceding claims, wherein the relative movement is caused prior to weighing and/or during weighing.

9. Method according to any of the preceding claims, wherein the at least one pharmaceutical container (10) is weighed by lifting by means of the weighing device (1).

10. Processing machine (100) for processing the pharmaceutical containers (10), comprising a weighing device (1), wherein the processing machine (100) is designed to carry out the method according to any of the preceding claims.

## Revendications

1. Procédé pour peser des contenants pharmaceutiques (10) emboîtés dans un support (11),
selon lequel au moins l'un des contenants (10) emboîtés est pesé au moyen d'un dispositif de pesée (1),
dans lequel un mouvement relatif entre le au moins un contenant pharmaceutique (10) et le support (11) est provoqué, afin de libérer le contenant pharmaceutique (10) du support (11) pour augmenter la précision de pesée,
**caractérisé en ce que** le mouvement relatif est provoqué par une oscillation, en particulier une oscillation harmonique.

2. Procédé selon la revendication 1, dans lequel l'oscillation s'effectue dans une direction x (x) et/ou dans une direction y (y) et/ou dans une direction z(z).

3. Procédé selon l'une quelconque des revendications 1 ou 2, dans lequel le support (11) et/ou le dispositif de pesée (1) exécutent l'oscillation sous forme d'un mouvement.

4. Procédé selon la revendication 3, dans lequel le mouvement du support (11) et/ou du dispositif de pesée (1) est provoqué par au moins un servomoteur (5), en particulier avec un excentrique (51), et/ou au moins un moteur vibrant (6).

5. Procédé selon l'une quelconque des revendications 1 ou 2, dans lequel l'oscillation est introduite sous forme de bruit, en particulier au moyen d'au moins un système de haut-parleur (7).

6. Procédé selon l'une quelconque des revendications précédentes, dans lequel le mouvement relatif est provoqué par un écoulement d'air, en particulier un écoulement d'air pulsatile (80), sur le contenant pharmaceutique (10), dans lequel l'écoulement d'air est généré en particulier au moyen d'au moins un système de ventilateur (8).

7. Procédé selon l'une quelconque des revendications précédentes, dans lequel le mouvement relatif est provoqué par des effets électrostatiques (9) sur le contenant pharmaceutique (10).

8. Procédé selon l'une quelconque des revendications précédentes, dans lequel le mouvement relatif est provoqué avant la pesée et/ou pendant la pesée.

9. Procédé selon l'une quelconque des revendications précédentes, dans lequel le au moins un contenant pharmaceutique (10) est pesé par levage au moyen du dispositif de pesée (1).

10. Machine de traitement (100) pour traiter les contenants pharmaceutiques (10), comprenant un système de pesée (1), dans laquelle la machine de traitement (100) est conçue pour mettre en œuvre le procédé selon l'une quelconque des revendications précédentes.
